# EUROPÄISCHE PATENTSCHRIFT

(11) **EP 0 525 394 B1**
(45) Veröffentlichungstag und Bekanntmachung des Hinweises auf die Patenterteilung: **28.09.1994**
(21) Anmeldenummer: 92110821.3
(22) Anmeldetag: 26.06.1992
(51) Int. Cl.: C04B 35/10, C04B 35/66

(54) **Freifliessende feuerfeste Giessmasse**
Free-flowing refractory casting composition
Composition de fonderie réfractaire à écoulement libre

(30) Priorität: 01.08.1991 DE 4125511
(43) Veröffentlichungstag der Anmeldung: 03.02.1993
(73) Patentinhaber: Veitsch-Radex Aktiengesellschaft für feuerfeste Erzeugnisse, A-1040 Wien (AT)
(72) Erfinder: Bugajski, Matgorzata, Dr., A-9545 Radenthein (AT); Mörtl, Günther, Dr., A-9500 Villach (AT); Hösler, Margit, W-5401 Urmitz (DE)
(74) Vertreter: Becker, Thomas, Dr., Dipl.-Ing.

(56) Entgegenhaltungen:
- EP-A- 0 425 086
- WO-A-86/00292
- WO-A-90/03957
- DE-A- 3 537 412
- US-A- 4 943 544

## Beschreibung

Die Erfindung betrifft eine freifließende feuerfeste Gießmasse. Der Begriff Gießmasse bedeutet dabei: trockener Mörtel, der mit Wasser zu einer Gießmasse anmachbar ist, soweit nicht anders angegeben oder aus dem Sinnzusammenhang erkennbar.

Unter Gießmassen werden feuerfeste Massen verstanden, die sich durch Vergießen in Verschalungen verarbeiten lassen. Üblicherweise sind diese Massen thixotrop. Dies gilt vor allem für sogenannte Vibrationsmassen. Eine solche Vibrationsmasse beschreibt die EP 0 247 351 B1. Bei der Anwendung der Vibrationsmassen in der Stahlindustrie, beispielsweise im Hochofen, Tundish, Pfanne, Deckel oder im Ausgußbereich wird die Masse mittels pneumatischer beziehungsweise elektrischer Vibratoren behandelt, um die gewünschte Dichte und damit eine bessere Infiltrationsbeständigkeit gegenüber metallurgischen Schmelzen zu erreichen.

WO-A-90 03 957 beschreibt eine gießbare Vibrationsmasse die als Hauptkomponente ein kalziniertes Bauxit Aggregat (80-96 Gew%) mit Korngröße < 6 mm und ein Zement (2-20 Gew%) oder chemischen Binder enthält. Weiterhin sind andere Komponenten genannt die fakultativ enthalten sein können. Auf Seite 7 wird eine solche Masse beschrieben die enthält:
- ultrafeines kalziniertes Bauxit Aggregat: 90,4 Gew%
- reaktive Alumina: 1 Gew%
- Kalzium aluminat Zement (70% Al₂O₃) : 4 Gew%
- Microfeine Silica: 3,75 Gew% und
- Natrium polyphosphat: 0,25 Gew% (als Dispergiermittel).

Nach Zugabe von 5 Gew% Anmachwasser wird die Masse in kubischen Blocks gegossen und mit Vibration verdichtet.

Die Anwendung eines liegenden Elektrovibrators erfordert eine aufwendige Schulung des Personals. Eine Verdichtung mit Flaschenrüttlern führt zu einer hohen körperlichen Belastung für das Personal. Außerdem stehen derartige Verdichtungshilfen nicht immer zur Verfügung.

Die Anwendung derartiger Vibratoren hat aber auch den Nachteil, daß es häufig zu störenden Fließbewegungen der Vibrationsmasse kommt. Diese Fließbewegungen führen dabei zu Inhomogenitäten und Lufteinschlüssen in der abgebundenen Masse.

Um insbesondere beim Ausgießen komplizierter Teile eine vollständige Verfüllung der Schablone zu erreichen, wird der Vibrationsmasse teilweise zusätzliches Wasser zugegeben, um die hier störenden thixotropen Eigenschaften der Masse zumindest teilweise zu eliminieren. Diese Maßnahme führt erfahrungsgemäß zu Festigkeitsverlusten.

Mit der Erfindung soll eine feuerfeste Gießmasse zur Verfügung gestellt werden, die ohne mechanische Verdichtungshilfen, also ohne Vibratoren, nach Wasserzugabe frei ausfließt und trotzdem eine der Vibrationsmasse vergleichbare Dichte im abgebundenen Zustand erreicht. Außerdem soll die Masse im erhärteten Zustand gute Festigkeitswerte aufweisen.

Dazu schlägt die Erfindung eine Gießmasse vor, die wie folgt aufgebaut ist und die nach Zugabe von 3,5 bis 7,0 Gewichtsteilen Anmachwasser je 100 Gewichtsteile Feststoff der Gießmasse ohne Vibrationshilfen frei ausfließt:
- 65 bis 87 Gew.-% eines feuerfesten Matrixmaterials auf Basis Al₂O₃, Zr₂O₃ und/oder Cr₂O₃ mit einer Korngröße zwischen 0,05 und 10,0 mm,
- 7,0 bis 22,0 Gew.-% einer reaktiven feuerfesten Komponente auf Basis Al₂O₃, Zr₂O₃ und/oder Cr₂O₃ mit einer Korngröße zwischen 0,1 und 10 µm,
- 0,5 bis 10,0 Gew.-% eines hydraulischen Bindemittels mit einem Al₂O₃-Gehalt über 68 Gew.-%,
- 0,2 bis 6,5 Gew.-% eines oder mehrerer, die mit Wasser angemachte Gießmasse stabilisierenden und/oder das Wasserrückhaltevermögen der Gießmasse fördernden Zusatzmittels.

Dabei soll die Summe der Komponenten (ausgenommen Anmachwasser) stets 100 Gew.-% ergeben. Dies gilt auch, sofern die Masse weitere Zusatzmittel oder Zusatzstoffe enthält, wie sie nachstehend beschrieben werden.

Entscheidend für die gewünschten Fließeigenschaften der Gießmasse ist eine Abstimmung des Anmachwassers sowie der genannten Zusatzmittel auf das feuerfeste Matrixmaterial und die reaktive feuerfeste Komponente. Diese Abstimmung soll so erfolgen, daß ein "Bluten", also ein Abstoßen überschüssigen Wassers sicher verhindert wird. Die konkrete Anmachwassermenge, die vorzugsweise ± 0,1 Gewichtsteile genau eingestellt wird, läßt sich dabei nur anhand des jeweils konkreten Versatzes empirisch ermitteln. Beispielhafte Versätze werden nachstehend angegeben.

Entscheidend für die vibrationsfrei ausfließende Gießmasse ist auch eine gezielte Abstimmung im Korngrößenbereich des feuerfesten Matrixmaterials und der reaktiven feuerfesten Komponente. Sowohl die qualitative wie auch quantitative Zusammensetzung werden dabei mit dem Anmachwassergehalt vorzugsweise so abgestimmt, daß die Viskosität der Masse während des Gießens möglichst niedrig ist.

Das feuerfeste Matrixmaterial besteht vorzugsweise aus Tabulartonerde, Korund, Zirkon-Aluminium-Schmelzkorund, Chrom-Schmelzkorund und/oder Bauxit. Das feuerfeste Matrixmaterial wirkt im Verhältnis zu der genannten reaktiven feuerfesten Komponente in der Masse als Füllstoff. Der Mindestgehalt dieses Füllstoffes beträgt nach einer vorteilhaften Ausführungsform 73,0 Gew.-%.

Die reaktive feuerfeste Komponente, die gleichzeitig eine Art Binderfunktion ausübt, besteht vorzugsweise aus kalzinierter Tonerde oder anderen, hochreaktiven feuerfesten Werkstoffen, wie mikronisiertem Schmelzkorund.

Grundsätzlich gilt: je feiner diese Komponente ist, umso höher ist ihr Reaktionsvermögen und umso leichter läßt sich die fertige Gießmasse ohne Vibration verdichten.

Der Gehalt der reaktiven feuerfesten Komponente soll zwischen 7,0 und 22,0 Gew.-% betragen, wobei ein Bereich zwischen 12,0 und 20,0 Gew.-% in der Regel bereits zu guten Ergebnissen führt.

Das Bindemittel wird nach einer vorteilhaften Ausführungsform durch Tonerdezement zur Verfügung gestellt. Bereits 1,5 bis 4,0 Gew.-% reichen für eine gute und sichere Bindung aus, insbesondere bei entsprechend erhöhten Anteilen der mikronisierten feuerfesten Komponente.

Durch einen Abbindeverzögerer, beispielsweise Borax, kann die Abbindegeschwindigkeit - je nach Bedarf - eingestellt werden. Ein solcher Abbindeverzögerer wird in Mengen zwischen 0,02 und 0,2 Gew.-% der Gießmasse zugegeben.

Dort, wo kürzere Abbindezeiten gewünscht werden, können entsprechend chemische Beschleuniger eingesetzt werden. Es hat sich aber auch herausgestellt, daß ein Zusatz von 0,5 bis 2,5 Gew.-% Graphit in gleichem Sinne wirkt.

Die Fließeigenschaften der Gießmasse werden weiter durch die genannten stabilisierenden und/oder das Wasserrückhaltevermögen der Gießmasse fördernden Zusatzmittel verbessert. Derartige Zusatzstoffe führen zu einer Aktivierung der Oberfläche der einzelnen Festteilchen. Dabei haben sich feinteiliger Ton, insbesondere Kaolin oder Bentonit und/oder Quarzmehl als besonders vorteilhaft herausgestellt. Während der feinteilige Ton in einer Menge zwischen 0,2 und 1,5 Gew.-% eingesetzt werden kann, liegt der Quarzmehl-Anteil vorzugsweise etwas geringer und beträgt zwischen 0,1 und 1,0 Gew.-%. Beide Zusatzmittel sollten in einer Korngröße < 1 µm eingebracht werden. Nach Vorversuchen scheint es so, als ob die Stabilisierung der angemachten Gießmasse durch diese Mittel insbesondere darauf beruht, daß kleine Poren zwischen den Zement- und Feuerfestteilchen verfüllt werden, wenn die Masse abbindet.

Zur Verbesserung der Homogenität der Gießmasse wird weiterhin die Zugabe eines Dispergiermittels in einer Menge zwischen 0,02 und 0,2 Gew.-% vorgeschlagen. Derartige Dispergiermittel sind an sich bekannt, jedoch für andere Massen. Beispielhafte Dispergiermittel sind Natrium-Polyphosphat und/oder Natrium- beziehungsweise Ammoniumsalze von Polyacrylaten.

Auch die Zugabe eines Gleitmittels kann in Abhängigkeit von dem jeweiligen Anwendungsfall von Vorteil sein, um die Fließeigenschaften der Masse noch weiter zu verbessern. Zu derartigen Gleitmitteln, wie sie hier Verwendung finden können, gehören insbesondere mehrwertige Alkohole. Ein Anteil von 0,1 bis 1,0 Gew.-% führt bereits zu einer Verbesserung der Fließeigenschaften der Gießmasse.

In weiteren Ausgestaltungen kann die Gießmasse folgende Merkmale aufweisen:
- Als Dispergiermittel kann Oxalsäure verwendet werden.
- Als Abbindeverzögerer kann Zitronensäure eingesetzt werden.
- Der bevorzugte Korngrößenbereich für die feuerfeste reaktive Komponente beträgt zwischen 0,1 und 8,0 µm.

Nachstehend wird die Erfindung anhand eines Ausführungsbeispieles näher erläutert.

Die Gießmasse ist wie folgt aufgebaut:

| | |
|---|---|
| - Schmelzkorund (0,05 bis 10 mm) | 77,00 Gew.-% |
| - kalzinierte Tonerde (0,4 bis 8,0 µm) | 20,00 Gew.-% |
| - Tonerdezement (70,0 Gew.-% Al₂O₃) | 2,00 Gew.-% |
| - Kaolin (< 1 µm) | 0,55 Gew.-% |
| - Quarzmehl (< 1 µm) | 0,30 Gew.-% |
| - Natrium-Pre-Polyphosphat | 0,05 Gew.-% |
| - Borax | 0,05 Gew.-% |
| - Oxalsäure | 0,05 Gew.-% |
| | 1̅0̅0̅,̅0̅0̅ G̅e̅w̅.̅-̅%̅ |

100 Gewichtsteile der Masse werden mit 4,9 Gewichsteilen Wasser homogen vermischt.

Die Masse beginnt nach ca. 60 Minuten abzubinden. Die Abbindung ist nach ca. 150 Minuten beendet.

Die Rohdichte der Masse beträgt 3,30 g/cm³ und erreicht damit Werte, wie sie bisher nur für Vibrationsmassen bekannt waren.

Die scheinbare Porosität liegt bei 14,5 Vol.-%.

Es konnte eine Kalt-Biegefestigkeit der abgebundenen Masse von 3,8 N/mm² und eine Kalt-Druckfestigkeit von ca. 30 N/mm² ermittelt werden.

## Patentansprüche

1. Feuerfeste Gießmasse aus
1.1 65,0 bis 87,0 Gew.-% feuerfestem Matrixmaterial auf Basis Al₂O₃, Zr₂O₃ und/oder Cr₂O₃ mit einer Korngröße zwischen 0,05 und 10,0 mm,
1.2 7,0 bis 22,0 Gew.-% einer reaktiven feuerfesten Komponente auf Basis Al₂O₃, Zr₂O₃ und/oder Cr₂O₃ mit einer Korngröße zwischen 0,1 und 10,0 µm,
1.3 0,5 bis 10,0 Gew.-% eines hydraulischen Bindemittels mit einem Al₂O₃-Gehalt über 68,0 Gew.-%, sowie
1.4 0,2 bis 6,5 Gew.-% eines oder mehrerer, die nach Zugabe von 3,5 bis 7,0 Gewichtsteilen Anmachwasser je 100 Gewichtsteile Feststoffe frei fließende Gießmasse stabilisierenden und/oder das Wasserrückhaltevermögen der Gießmasse fördernden Zusatzmittels.

2. Gießmasse nach Anspruch 1, bei der das feuerfeste Matrixmaterial aus Taburlartonerde, Korund, Zirkon-Aluminium-Schmelzkorund, Chrom-Schmelzkorund und/oder Bauxit besteht.

3. Gießmasse nach Anspruch 1 oder 2 mit einem Gehalt der feuerfesten Matrixmasse zwischen 73,0 und 87,0 Gew.-%.

4. Gießmasse nach einem der Ansprüche 1 bis 3, bei der die reaktive feuerfeste Komponente aus kalzinierter Tonerde und/oder Schmelzkorund besteht.

5. Gießmasse nach einem der Ansprüche 1 bis 4, bei der die reaktive feuerfeste Komponente in einer Kornfraktion zwischen 0,1 und 8,0 µm vorliegt.

6. Gießmasse nach einem der Ansprüche 1 bis 5 mit einem Gehalt der reaktiven feuerfesten Komponente zwischen 12,0 und 20,0 Gew.-%.

7. Gießmasse nach einem der Ansprüche 1 bis 6, bei der das Bindemittel aus Tonerdezement besteht.

8. Gießmasse nach einem der Ansprüche 1 bis 7, bei der der Bindemittelgehalt 1,5 bis 4,0 Gew.-% beträgt.

9. Gießmasse nach einem der Ansprüche 1 bis 8, bei der das Zusatzmittel aus feinteiligem Kaolin und/oder Quarzmehl besteht.

10. Gießmasse nach einem der Ansprüche 1 bis 9, bei der das in fester Form zugegebene Zusatzmittel eine Korngröße < 1,0 µm aufweist.

11. Gießmasse nach einem der Ansprüche 1 bis 10, die zusätzlich einen Abbindeverzögerer in einer Menge zwischen 0,02 und 0,2 Gew.-% enthält.

12. Gießmasse nach Anspruch 11, bei der der Abbindeverzögerer aus Borax und/oder Zitronensäure besteht.

13. Gießmasse nach einem der Ansprüche 1 bis 12, die zusätzlich Graphit in einer Menge von 0,5 bis 2,5 Gew.-% aufweist.

14. Gießmasse nach einem der Ansprüche 1 bis 13, die mindestens ein Dispergiermittel in einer Menge zwischen 0,02 und 0,2 Gew.-% enthält.

15. Gießmasse nach Anspruch 14, bei der das Dispergiermittel aus einem Natrium-Polyphosphat, Natrium- beziehungsweise Ammoniumsalz eines Polyacrylats und/oder Oxalsäure besteht.

16. Gießmasse nach einem der Ansprüche 1 bis 15 mit einem Gehalt eines die Gleiteigenschaften der Masse verbessernden Mittels zwischen 0,1 und 1,0 Gew.-%.

17. Gießmasse nach Anspruch 16, bei der das Gleitmittel aus mehrwertigen Alkoholen besteht.

## Claims

1. Refractory casting compound consisting of
1.1 65.0 to 87.0 wt % refractory matrix material based on Al₂O₃, ZrO₂ and/or Cr₂O₃ having a granular size between 0.05 and 10.0 mm,
1.2 7.0 to 22.0 wt % of a reactive refractory constituent based on Al₂O₃, ZrO₂ and/or Cr₂O₃ having a granular size between 0.1 and 10.0 µm,
1.3 0.5 to 10.0 wt % of a hydraulic bonding agent with an Al₂O₃ proportion in excess of 68.0 wt %, as well as
1.4 0.2 to 6.5 wt % of one or several additives which, after addition of 3.5 to 7.0 parts by weight of mixing water per 100 parts by weight of solids, stabilise free flowing casting compound and/or improve the water-retaining capacity of the casting compound.

2. Casting compound according to Claim 1, in which the refractory matrix material consists of tabular alumina, corundum, zirconium-aluminium-fused corundum, chromium-fused corundum and/or bauxite.

3. Casting compound according to Claim 1 or 2, in which the proportion of refractory matrix compound amounts to between 73.0 and 87.0 wt %.

4. Casting compound according to one of Claims 1 to 3, in which the reactive refractory constituent consists of calcined alumina and/or fused corundum.

5. Casting compound according to one of Claims 1 to 4 in which the reactive refractory constituent is present within a granular size range from 0.1 to 8.0 µm.

6. Casting compound according to one of Claims 1 to 5 in which the proportion of reactive refractory constituent lies between 12.0 and 20.0 wt %.

7. Casting compound according to one of Claims 1 to 6, in which the bonding agent consists of aluminous cement.

8. Casting compound according to one of Claims 1 to 7, in which the proportion of bonding agent amounts to 1.5 to 4.0 wt %.

9. Casting compound according to one of Claims 1 to 8, in which the additive consists of finely dispersed kaolin and/or quartz powder.

10. Casting compound according to one of Claims 1 to 9, in which the additive added in solid form has a granular size of less than 1.0 µm.

11. Casting compound according to one of Claims 1 to 10, which in addition contains a setting retarder in a proportion between 0.02 and 0.2 wt %.

12. Casting compound according to Claim 11, in which the setting retarder consists of borax and/or citric acid.

13. Casting compound according to one of Claims 1 to 12, which also contains graphite in a proportion from 0.5 to 2.5 wt %.

14. Casting compound according to one of Claims 1 to 13, containing at least one dispersing agent in a proportion between 0.02 and 0.2 wt %.

15. Casting compound according to Claim 14 in which the dispersing agent consists of a sodium polyphosphate, sodium or ammonium salt of a polyacrylate and/or oxalic acid.

16. Casting compound according to one of Claims 1 to 15, containing an agent improving the lubricating characteristics of the compound in a proportion between 0.1 and 1.0 wt %.

17. Casting compound according to Claim 16, in which the lubricant consists of polyvalent alcohols.

## Revendications

1. Composition de fonderie réfractaire, composée de :
1.1 de 65,0 à 87,0 % en poids de matériaux de matrice réfractaire à base de Al₂O₃, ZrO₂ et/ou Cr₂O₃, d'une granulométrie comprise entre 0,05 et 10,0 mm,
1.2 de 7,0 à 22,0 % en poids d'un composant réfractaire réactif à base de Al₂O₃, ZrO₂ et/ou Cr₂O₃, d'une granulométrie comprise entre 0,1 et 10,0 µm,
1.3 de 0,5 à 10,0 % en poids d'un liant hydraulique ayant une teneur en Al₂O₃ supérieure à 68,0 % en poids, ainsi que
1.4 de 0,2 à 6,5 % en poids d'un ou plusieurs additifs, stabilisant la composition de fonderie à écoulement libre, après adjonction de 3,5 à 7,0 % en poids d'eau à gâcher pour 100 parties en poids de solide, et/ou favorisant le taux de rétention de l'humidité dans la composition de fonderie.

2. Composition de fonderie selon la revendication 1, dans laquelle le matériau de matrice réfractaire est composé d'alumine tabulaire, de corindon, de zircon-aluminium-corindon fondu, chrome-corindon fondu et/ou bauxite.

3. Composition de fonderie selon la revendication 1 ou 2, présentant une teneur de masse de matrice réfractaire comprise dans la plage allant de 73,0 à 87,0 % en poids.

4. Composition de fonderie selon l'une des revendications 1 à 3, caractérisée en ce que le composant réfractaire réactif est constitué d'alumine calcinée et/ou de corindon fondu.

5. Composition de fonderie selon l'une des revendications 1 à 4, dans laquelle le composant réfractaire réactif se présente sous une fraction granulaire comprise dans la plage allant de 0,1 à 8,0 µm.

6. Composition de fonderie selon l'une des revendications 1 à 5, comportant par une teneur de composants réfractaires réactifs située dans une plage allant de 12,0 à 20,0 % en poids.

7. Composition de fonderie selon l'une des revendications 1 à 6, dans laquelle le liant est composé de ciment alumineux.

8. Composition de fonderie selon l'une des revendications 1 à 7, dans laquelle la teneur en liant est comprise dans une plage allant de 1,5 à 4 % en poids.

9. Composition de fonderie selon l'une des revendications 1 à 8, dans laquelle l'additif est composé de kaolin finement divisé et/ou de poudre de quartz.

10. Composition de fonderie selon l'une des revendications 1 à 9, dans laquelle l'additif ajouté sous forme solide a une granulométrie inférieure à 1,0 µm.

11. Composition de fonderie selon l'une des revendications 1 à 10, contenant en plus un retardateur de prise, en une quantité comprise entre 0,02 et 0,2 % en poids.

12. Composition de fonderie selon la revendication 11, dans laquelle le retardateur de prise est composé de borax et/ou d'acide citrique.

13. Composition de fonderie selon l'une des revendications 1 à 12, contenant en plus du graphite, en une quantité comprise dans une plage allant 0,5 à 2,5 % en poids.

14. Composition de fonderie selon l'une des revendications 1 à 13, contenant au moins un dispersant, en une quantité comprise dans une plage allant de 0,02 à 0,2 % en poids

15. Composition de fonderie selon la revendication 14, dans laquelle le dispersant est composé d'un polyphosphate de sodium, d'un sel de sodium, respectivement d'aluminium, d'un polyacrylate et/ou d'acide oxalique.

16. Composition de fonderie selon l'une des revendications 1 à 15, présentant une teneur en un produit améliorant les propriétés de glissement de la masse, selon une proportion de 0,1 à 1,0 % en poids.

17. Composition de fonderie selon la revendication 16, dans laquelle l'agent de glissement est composé d'alcool à plusieurs valences.
